# EUROPÄISCHE PATENTANMELDUNG

(11) **EP 4 133 920 A2**
(43) Veröffentlichungstag der Anmeldung: **15.02.2023**
(21) Anmeldenummer: 22168336.0
(22) Anmeldetag: 14.04.2022
(51) Int. Cl.: A01B 63/00, A01B 76/00, A01B 63/111

(54) **VERFAHREN ZUR MESSUNG EINER ABSOLUTEN ARBEITSHÖHE MEHRERER LANDWIRTSCHAFTLICHER ANBAUGERÄTE**

(30) Priorität: 10.08.2021 DE 102021120759
(71) Anmelder: CLAAS Tractor SAS, 78141 Velizy-Villacoublay (FR)
(72) Erfinder: Wieckhorst, Jan Carsten, 29525 Uelzen Orsteil Hanstedt 2 (DE); Birkmann, Christian, 33775 Versmold (DE); Schaub, Christian, 33098 Paderborn (DE); Pieper, Jona, 59394 Nordkirchen (DE); Meyer, Lennart, 52072 Aachen (DE)
(74) Vertreter: CLAAS Gruppe

(57) **Zusammenfassung**

Die Erfindung betrifft ein Verfahren zur Messung einer absoluten Arbeitshöhe (10) mehrerer landwirtschaftlicher Anbaugeräte (3), mittels einer Sensoranordnung (11) mit einem Sensor (12), mit mindestens einer Sensorhalterung (13) und mit einer Steueranordnung (14), wobei der Sensor (12) mittels der mindestens einen Sensorhalterung (13) jeweils an einer Montageposition (15) an unterschiedlichen Anbaugeräten (3) reversibel montiert wird, wobei der Sensor (12) im montierten Zustand eine Arbeitshöhe (10) des Anbaugerätes (3) betreffende Messdaten aufnimmt und an die Steueranordnung (14) überträgt und wobei die Steueranordnung (14) aus einem montagepositionsspezifischen Kalibrationsdatensatz die Arbeitshöhe (10) des jeweiligen Anbaugerätes (3) ermittelt.

## Beschreibung

Die Erfindung betrifft ein Verfahren zur Messung einer absoluten Arbeitshöhe mehrerer landwirtschaftlicher Anbaugeräte gemäß dem Anspruch 1, eine Sensoranordnung zur Messung einer absoluten Arbeitshöhe mehrerer landwirtschaftlicher Anbaugeräte gemäß dem Anspruch 12, ein landwirtschaftliches Gespann gemäß dem Oberbegriff von Anspruch 18, eine landwirtschaftliche Flotte gemäß dem Oberbegriff von Anspruch 20, eine Sensorhalterung gemäß dem Oberbegriff von Anspruch 21, einen Abstandssensor zur Verwendung als Sensor in einer Sensoranordnung gemäß dem Oberbegriff von Anspruch 22 sowie ein Antennenmodul gemäß dem Anspruch 23.

Landwirtschaftliche Arbeitsmaschinen wie Mähdrescher, Feldhäcksler und Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund, wobei das landwirtschaftliche Anbaugerät insbesondere ein eigenes Fahrzeug sein kann. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielsweise um Aussaat- oder Düngevorgänge handeln, um das Auftragen von Pflanzenschutzmittel, Bodenbearbeitungen wie das Pflügen oder Erntevorgänge wie das Mähen. Diesen Feldbearbeitungen ist gemeinsam, dass die Anbaugeräte dabei zumeist auf eine spezifische Arbeitshöhe eingestellt werden. Die Arbeitshöhe kann, beispielsweise beim Pflügen, auch einen negativen Wert annehmen und somit eine Arbeitstiefe sein. Der Erfolg und zum Teil der Energieverbrauch der Feldbearbeitung hängt dabei oft maßgeblich von der Arbeitshöhe ab. Gleichzeitig hängt diese jedoch von diversen Maschinenparametern des Anbaugeräts einer landwirtschaftlichen Arbeitsmaschine ab.

Beim Pflügen beispielsweise ist die Arbeitstiefe zum einen von Parametern abhängig, die je nach Pflug vom Benutzer manuell am Pflug eingestellt werden und zum anderen von Einstellungen der Geräteschnittstelle an der landwirtschaftlichen Arbeitsmaschine. Weiterhin haben auch eine Achslast und ein Reifendruck der landwirtschaftlichen Arbeitsmaschine indirekt über die Reifeneinfederung einen Einfluss auf die Arbeitstiefe des Pflugs. Zwar können moderne Pflüge zum Teil zumindest über hydraulische Zylinder grundsätzlich in der Arbeitstiefe variiert werden, allerdings fehlen die notwendigen Messdaten, um diese Einstellungen gezielt vorzunehmen. Ähnliche Probleme gibt es bei anderen landwirtschaftlichen Anbaugeräten.

In der Praxis werden für Feldbearbeitungen diverse Regelungstypen, insbesondere Zugkraftregelungen, Schlupfregelungen, Lageregelungen und Mischregelungen der Zugkraft- und Lageregelung, eingesetzt. Dabei stellt sich die Arbeitshöhe automatisch mit ein, wobei allerdings versucht wird, diese einigermaßen konstant zu halten. Maschinenparameter der landwirtschaftlichen Arbeitsmaschine wie der Reifendruck werden üblicherweise nicht berücksichtigt. Dabei kommt also nur eine relative Arbeitshöhenmessung zum Einsatz. Diese relative Arbeitshöhenmessung bezieht sich bei einigen bekannten Systemen auf die landwirtschaftliche Arbeitsmaschine. Bei anderen bekannten Systemen (WO 2019/158454 A1) wird die Arbeitshöhe beziehungsweise Arbeitstiefe relativ zum Anbaugerät selbst gemessen.

Es ist dabei eine Herausforderung, die Feldbearbeitung allgemein zu verbessern und eine kostengünstige Möglichkeit der Messung einer absoluten Arbeitshöhe zu schaffen.

Der Erfindung liegt das Problem zugrunde, den bekannten Stand der Technik derart auszugestalten und weiterzubilden, dass hinsichtlich der genannten Herausforderung eine weitere Optimierung erreicht wird.

Das obige Problem wird durch die Merkmale von Anspruch 1 gelöst.

Wesentlich ist die grundsätzliche Überlegung, dass ein dedizierter Arbeitshöhensensor für die Ermittlung der Arbeitshöhe mehrerer landwirtschaftlicher Anbaugeräte genutzt werden kann. Dieser Sensor wird mit einer Sensorhalterung versehen, mittels der er jeweils an einer Montageposition an unterschiedlichen Anbaugeräten reversibel montiert werden kann. Somit wird das Problem vermieden, dass eine dedizierte Arbeitshöhensensorik für landwirtschaftliche Anbaugeräte zwar grundsätzlich möglich ist, die Sensorik jedoch zu teuer ist, um viele landwirtschaftliche Anbaugeräte damit zu versehen. Mittels einer Steueranordnung kann aus einem montagepositionsspezifischen Kalibrationsdatensatz die Arbeitshöhe des jeweiligen Anbaugeräts ermittelt werden. So kann mit einem einzelnen Sensor die Arbeitshöhe unterschiedlicher Anbaugeräte ermittelt werden. Da vorliegend die absolute Arbeitshöhe ermittelt wird, wird der vielfältige Einfluss der Maschinenparameter der landwirtschaftlichen Arbeitsmaschine und des landwirtschaftlichen Anbaugerätes außen vor gelassen. Dies ermöglicht die einfache Dokumentation, Information, Steuerung oder Regelung der tatsächlichen Arbeitshöhe anstatt eines Surrogatparameters.

Im Einzelnen wird ein Verfahren zur Messung einer absoluten Arbeitshöhe mehrerer landwirtschaftlicher Anbaugeräte, mittels einer Sensoranordnung mit einem Sensor, mit mindestens einer Sensorhalterung und mit einer Steueranordnung, wobei der Sensor mittels der mindestens einen Sensorhalterung jeweils an einer Montageposition an unterschiedlichen Anbaugeräten reversibel montiert wird, wobei der Sensor im montierten Zustand eine Arbeitshöhe des Anbaugeräts betreffende Messdaten aufnimmt und an die Steueranordnung überträgt und wobei die Steueranordnung aus einem montagepositionsspezifischen Kalibrationsdatensatz die Arbeitshöhe des jeweiligen Anbaugerätes ermittelt, vorgeschlagen.

Die Ausgestaltungen gemäß Anspruch 2 betreffen die montagepositionsspezifischen Kalibrationsdatensätze. Diese können eine Referenzhöhe, eine Ausrichtung des Sensors und eine Lokalisierung der Montageposition relativ zum Anbaugerät umfassen. Diese Informationen sind besonders geeignet, daraus die Arbeitshöhe des jeweiligen Anbaugerätes zu ermitteln.

Gemäß Anspruch 3 können die montagepositionsspezifischen Kalibrationsdatensätze in einem Speicher der Steueranordnung hinterlegt sein. Weiterhin betrifft Anspruch 3 bevorzugte Typen von Anbaugeräten, deren Arbeitshöhe mittels des vorschlagsgemäßen Verfahrens ermittelt werden kann.

Bei einer bevorzugten Ausgestaltung ist die Sensorhalterung vom Sensor getrennt an den unterschiedlichen Anbaugeräten montierbar und der Sensor reversibel an der Sensorhalterung montierbar. Diese Ausgestaltung ist Gegenstand von Anspruch 4. Dabei kann vorzugsweise vorgesehen sein, dass die Sensorhalterung ein Identifikationsmerkmal aufweist. Insgesamt wird so ermöglicht, eine oder mehrere Sensorhalterungen an den Anbaugeräten verbleiben zu lassen.

Das Identifikationsmerkmal kann gemäß Anspruch 5 insbesondere dazu genutzt werden, den montagepositionsspezifischen Kalibrationsdatensatz automatisch auszuwählen. Dadurch wird eine einfache Montage der Sensoren nach dem "plug and play"-Prinzip ermöglicht. Bestenfalls muss ein Benutzer nur den Sensor an der Sensorhalterung anbringen und dieser ist sofort betriebsbereit.

Grundsätzlich können an einem Anbaugerät mehrere Arbeitshöhen relevant sein oder die relevante Arbeitshöhe kann von der Position des Sensors beabstandet sein. Insbesondere vor diesem Hintergrund betrifft Anspruch 6 die Möglichkeit, die Arbeitshöhe zusätzlich aus einem anbaugerätespezifischen Kalibrationsdatensatz und/oder einem Kopplungsdatensatz der Geräteschnittstelle zu ermitteln. Wie bereits erläutert haben insbesondere eine Kinematik des Anbaugerätes und die Geräteschnittstelle allgemein einen Einfluss auf die Arbeitshöhe an verschiedenen Stellen des Anbaugerätes. Beispielsweise durch eine Achstransformation können diese Einflüsse berücksichtigt werden.

Anspruch 7 betrifft eine mögliche Kalibrationsroutine, in der ein montagepositionsspezifischer Kalibrationsdatensatz erzeugt werden kann. In dieser kann insbesondere eine Referenzhöhe gemessen und abgespeichert werden.

Gemäß Anspruch 8 kann die Kalibrationsroutine mittels eines natürlichsprachigen Dialogs ablaufen. So kann ein Benutzer auf einfache Art und Weise durch die Kalibrationsroutine geleitet werden und muss diese beispielsweise nicht aufwändig in einem Handbuch nachschlagen.

Gemäß Anspruch 9 kann vorgesehen sein, dass die landwirtschaftliche Arbeitsmaschine und/oder das Anbaugerät während der Kalibrationsroutine auf ebenem Untergrund steht. Es kann dann also für eine oder mehrere Montagepositionen die Referenzhöhe ermittelt werden, die als solche eine Arbeitshöhe von Null abbildet oder auf diese bezogen ist. Die Arbeitshöhe kann dann während des Betriebs durch Verrechnen der Messdaten mit der Referenzhöhe ermittelt werden.

Im einfachsten Fall beträgt die absolute Arbeitshöhe eine gemessene Arbeitshöhe abzüglich der Referenzhöhe. Diese Ausgestaltung ist Gegenstand von Anspruch 10. Weiterhin kann die Steueranordnung die Arbeitshöhe kontinuierlich ermitteln, an einen Benutzer ausgeben oder basierend auf der Arbeitshöhe einen Maschinenparameter der landwirtschaftlichen Arbeitsmaschine und/oder des Anbaugerätes einstellen. Besonders interessant ist, dass der Benutzer oder die Steueranordnung so die tatsächliche Arbeitshöhe steuern oder regeln können.

Gemäß Anspruch 11 kann vorgesehen sein, dass der Sensor in der Kalibrationsroutine oder im Betrieb während der Erfassung der Arbeitshöhe einen Abstand zum Boden von mindestens zehn cm und höchstens 1,5 m aufweist. In diesen Abständen lassen sich bei vielen Sensortypen gute Messergebnisse erzielen.

Nach einer weiteren Lehre gemäß Anspruch 12, der eigenständige Bedeutung zukommt, wird eine Sensoranordnung zur Messung einer absoluten Arbeitshöhe mehrerer landwirtschaftlicher Anbaugeräte, insbesondere eingerichtet zur Verwendung in dem vorschlagsgemäßen Verfahren, mit einem Sensor, mit mindestens einer Sensorhalterung und mit einer Steueranordnung, wobei der Sensor mittels der mindestens einen Sensorhalterung jeweils an einer Montageposition an unterschiedlichen Anbaugeräten reversibel montierbar ist, wobei der Sensor eingerichtet ist, im montierten Zustand eine Arbeitshöhe des Anbaugerätes betreffende Messdaten aufzunehmen und an die Steueranordnung zu übertragen, wobei die Steueranordnung eingerichtet ist, aus einem montagepositionsspezifischen Kalibrationsdatensatz die Arbeitshöhe des jeweiligen Anbaugerätes zu ermitteln, beansprucht.

Auf alle Ausführungen zu dem vorschlagsgemäßen Verfahren darf verwiesen werden. Auch bezüglich des vorschlagsgemäßen Verfahrens darf auf die Ausführungen zur Sensoranordnung verwiesen werden.

Gemäß Anspruch 13 kann der Sensor form- und/oder kraftschlüssig an der Sensorhalterung montierbar sein. Anspruch 13 gibt weiter bevorzugte Befestigungsmittel an. Dabei steht insbesondere eine schnelle und stabile Befestigung im Vordergrund.

Anspruch 14 betrifft bevorzugte Ausgestaltungen der Sensorhalterung. Insbesondere kann diese zur Stromversorgung des Sensors und/oder zur Kommunikation mit der landwirtschaftlichen Arbeitsmaschine ausgestaltet sein. Dafür kann die Sensorhalterung kabelgebunden mit der landwirtschaftlichen Arbeitsmaschine verbunden werden. Verbleibt die Sensorhalterung am landwirtschaftlichen Anbaugerät, fällt der Verkabelungsaufwand so nur einmalig an.

Anspruch 15 gibt bevorzugte Typen des Sensors an. Dieser ist insbesondere ein Abstandssensor und kann mit einem kontaktlosen Messprinzip arbeiten. Die angegebenen Typen von Sensoren sind für den Einsatz im landwirtschaftlichen Bereich besonders geeignet. Dabei muss berücksichtigt werden, dass der Sensor entsprechend robust, beispielsweise gegen Vibrationen, sein muss und auch bei höherer Staubentwicklung, Verschmutzungen, unterschiedlichen Temperaturen und in unterschiedlichen Umgebungen zuverlässig funktionieren sollte.

Wie bereits erwähnt, kann an einem Anbaugerät mehr als eine Arbeitshöhe relevant sein. Entsprechend kann gemäß Anspruch 16 vorgesehen sein, an einem Anbaugerät mehrere Sensoren anzubringen um insbesondere eine Längs- und/oder Querneigung des Anbaugerätes zu ermitteln. Ein Pflug beispielsweise weist diverse Eingriffspunkte mit dem Boden auf. Würde nur eine Arbeitshöhe an einer Stelle des Pflugs optimiert, könnte dies immer noch zu substantiellen Abweichungen an anderen Stellen des Pflugs führen.

Die Sensoranordnung kann gemäß Anspruch 17 weiterhin ein Antennenmodul aufweisen, das insbesondere mit der landwirtschaftlichen Arbeitsmaschine verbindbar ist. Über das Antennenmodul kann kabellos mit dem mindestens einen Sensor kommuniziert werden, wodurch auch ein Verkabelungsaufwand am landwirtschaftlichen Anbaugerät entfallen kann.

Nach einer weiteren Lehre gemäß Anspruch 18, der ebenfalls eigenständige Bedeutung zukommt, wird ein landwirtschaftliches Gespann beansprucht. Das landwirtschaftliche Gespann weist eine landwirtschaftliche Arbeitsmaschine und ein landwirtschaftliches Anbaugerät mit einer vorschlagsgemäßen Sensoranordnung auf.

Dabei ist wesentlich, dass der Sensor mit der Sensorhalterung an dem Anbaugerät montiert ist.

Auf alle Ausführungen zu dem vorschlagsgemäßen Verfahren und der vorschlagsgemäßen Sensoranordnung darf verwiesen werden.

Gemäß Anspruch 19 kann vorgesehen sein, dass die Steueranordnung Teil der landwirtschaftlichen Arbeitsmaschine ist. Dadurch werden der Transport und die Nutzung der Messdaten sowie der ermittelten Arbeitshöhe erleichtert.

Nach einer weiteren Lehre gemäß Anspruch 20, der ebenfalls eigenständige Bedeutung zukommt, wird eine landwirtschaftliche Flotte beansprucht. Diese weist mindestens eine landwirtschaftliche Arbeitsmaschine, mindestens zwei landwirtschaftliche Anbaugeräte und eine vorschlagsgemäße Sensoranordnung auf.

Dabei ist wesentlich, dass die Sensoranordnung mindestens zwei Sensorhalterungen aufweist, von denen je eine an einem der Anbaugeräte oder beide an mehreren Anbaugeräten montierbar sind und dass an beiden Anbaugeräten je mindestens eine Sensorhalterung montiert ist.

Auf alle Ausführungen zu dem vorschlagsgemäßen Verfahren, der vorschlagsgemäßen Sensoranordnung und dem vorschlagsgemäßen landwirtschaftlichen Gespann darf verwiesen werden.

Nach einer weiteren Lehre gemäß Anspruch 21, der ebenfalls eigenständige Bedeutung zukommt, wird eine Sensorhalterung beansprucht.

Dabei ist wesentlich, dass die Sensorhalterung geeignet ist, einen Sensor aufzunehmen und an einem landwirtschaftlichen Anbaugerät befestigt zu werden, dass die Sensorhalterung eine elektrische Verbindungseinheit, insbesondere ein Kabel oder eine Antenne, zur Verbindung mit einer Steueranordnung einer landwirtschaftlichen Arbeitsmaschine und/oder zur Energieübertragung von einer landwirtschaftlichen Arbeitsmaschine an den Sensor und ein Identifikationsmerkmal aufweist, dass die Sensorhalterung das Identifikationsmerkmal an die Steueranordnung übertragen kann und/oder das Identifikationsmerkmal geeignet ist, von dem Sensor ausgelesen zu werden.

Auf alle Ausführungen zu dem vorschlagsgemäßen Verfahren, der vorschlagsgemäßen Sensoranordnung, dem vorschlagsgemäßen landwirtschaftlichen Gespann und der vorschlagsgemäßen landwirtschaftlichen Flotte darf verwiesen werden.

Nach einer weiteren Lehre gemäß Anspruch 22, der ebenfalls eigenständige Bedeutung zukommt, wird ein Abstandssensor zur Verwendung als Sensor in einer vorschlagsgemäßen Sensoranordnung beansprucht.

Dabei ist wesentlich, dass der Sensor das Identifikationsmerkmal der Sensorhalterung auslesen und das Identifikationsmerkmal sowie einen Abstand umfassende Messdaten in einem Bus-kompatiblen Format an die Steueranordnung der landwirtschaftlichen Arbeitsmaschine übertragen kann.

Auf alle Ausführungen zu dem vorschlagsgemäßen Verfahren, der vorschlagsgemäßen Sensoranordnung, dem vorschlagsgemäßen landwirtschaftlichen Gespann, der vorschlagsgemäßen landwirtschaftlichen Flotte und der vorschlagsgemäßen Sensorhalterung darf verwiesen werden.

Nach einer weiteren Lehre gemäß Anspruch 23, der ebenfalls eigenständige Bedeutung zukommt, wird ein Antennenmodul zur Verwendung in einer vorschlagsgemäßen Sensoranordnung beansprucht.

Auf alle Ausführungen zu dem vorschlagsgemäßen Verfahren, der vorschlagsgemäßen Sensoranordnung, dem vorschlagsgemäßen landwirtschaftlichen Gespann, der vorschlagsgemäßen landwirtschaftlichen Flotte, der vorschlagsgemäßen Sensorhalterung und dem vorschlagsgemäßen Abstandssensor darf verwiesen werden.

Im Folgenden wird die Erfindung anhand einer lediglich Ausführungsbeispiele darstellenden Zeichnung näher erläutert. In der Zeichnung zeigt
- Fig. 1: eine landwirtschaftliche Flotte mit der vorschlagsgemäßen Sensoranordnung während der Durchführung des vorschlagsgemäßen Verfahrens,
- Fig. 2: unterschiedliche Anbaugeräte, mit denen das vorschlagsgemäße Verfahren durchgeführt werden kann und
- Fig. 3: eine Momentaufnahme während der Durchführung der Kalibrationsroutine.

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören Zugmaschinen, insbesondere Traktoren, und Erntemaschinen, insbesondere Mähdrescher, Feldhäcksler o.dgl. Bei dem dargestellten und insoweit bevorzugten Ausführungsbeispiel handelt es sich bei der landwirtschaftlichen Arbeitsmaschine 1 um einen Traktor.

Die Arbeitsmaschine 1 lässt sich über mindestens eine Geräteschnittstelle 2 mit mindestens einem Anbaugerät 3 bestücken. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber 4 ausgestaltet, der für die Kopplung mit dem Anbaugerät 3 zwei Unterlenker 5 und einen Oberlenker 6 aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen.

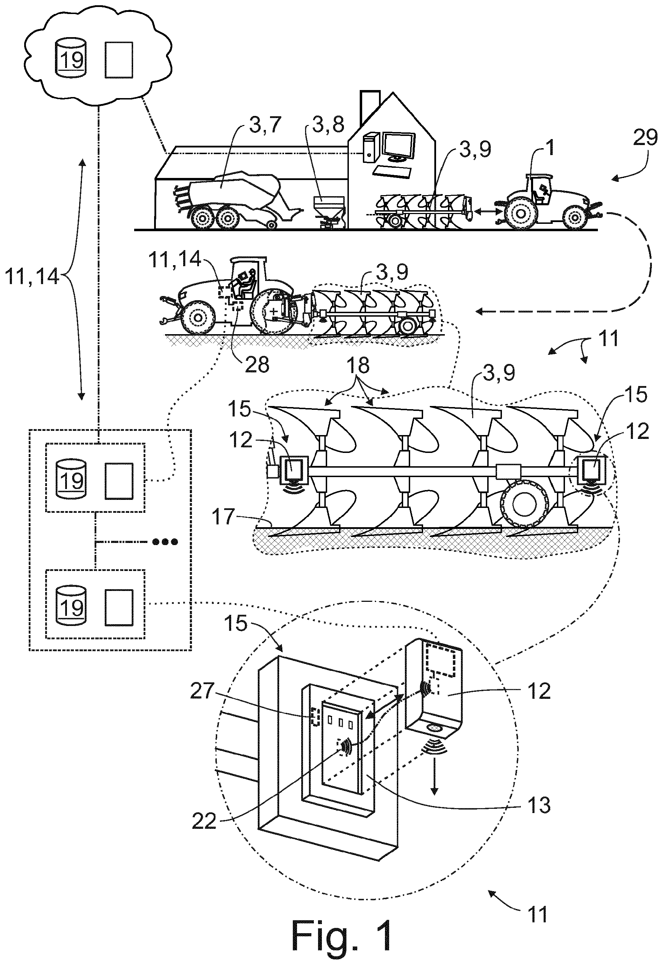

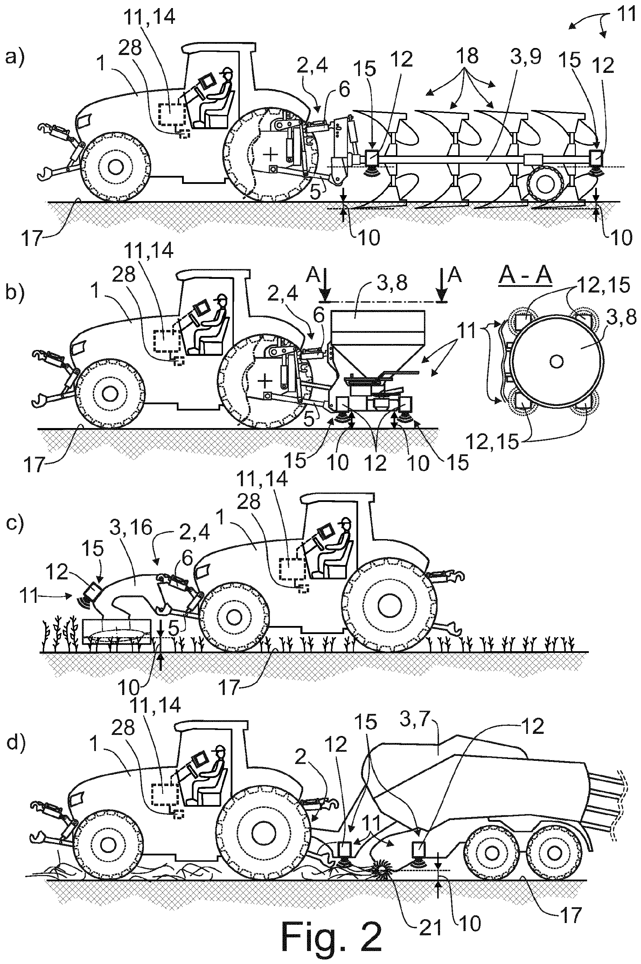

Fig. 1 zeigt mehrere landwirtschaftliche Anbaugeräte 3, die in dem vorschlagsgemäßen Verfahren verwendbar sind, konkret eine Ballenpresse 7, einen Kunstdüngerstreuer 8 und einen Pflug 9. In Fig. 2 sind diese in Aktion dargestellt.

Das in den Figuren dargestellte und insoweit bevorzugte Ausführungsbeispiel betrifft ein Verfahren zur Messung einer absoluten Arbeitshöhe 10 mehrerer landwirtschaftlicher Anbaugeräte 3, mittels einer Sensoranordnung 11 mit einem Sensor 12, mit mindestens einer Sensorhalterung 13 und mit einer Steueranordnung 14, wobei der Sensor 12 mittels der mindestens einen Sensorhalterung 13 jeweils an einer Montageposition 15 an unterschiedlichen Anbaugeräten 3 reversibel montiert wird, wobei der Sensor 12 im montierten Zustand eine Arbeitshöhe 10 des Anbaugerätes 3 betreffende Messdaten aufnimmt und an die Steueranordnung 14 überträgt und wobei die Steueranordnung 14 aus einem montagepositionsspezifischen Kalibrationsdatensatz die Arbeitshöhe 10 des jeweiligen Anbaugerätes 3 ermittelt.

Das vorschlagsgemäße Verfahren betrifft also konkret die Messung von Arbeitshöhen 10 bei unterschiedlichen landwirtschaftlichen Anbaugeräten 3. Diese unterschiedlichen landwirtschaftlichen Anbaugeräte 3 können aus unterschiedlichen Baureihen stammen, von unterschiedlichen Herstellern und so weiter. Vorzugsweise handelt es sich um landwirtschaftliche Anbaugeräte 3 unterschiedlicher Typen wie Pflüge 9, Eggen, Grubber, Kunstdüngerstreuer 8, Mähwerke 16 und so weiter.

Die Sensoranordnung 11 kann als solche eigenständig oder zumindest teilweise in die landwirtschaftliche Arbeitsmaschine 1 integriert sein. Insbesondere kann die Steueranordnung 14 der Sensoranordnung 11 beispielsweise eine Steueranordnung 14 der landwirtschaftlichen Arbeitsmaschine 1 sein. Genauso kann diese jedoch auch aus verteilten Recheneinheiten bestehen. Sie kann beispielsweise eine Steuereinheit der landwirtschaftlichen Arbeitsmaschine 1 und eine Cloud-Steuereinheit aufweisen.

Mittels des Sensors 12 wird eine absolute Arbeitshöhe 10 gemessen. Unter dem Begriff "absolut" wird nicht zwingend eine hochgenaue Messung verstanden, sondern allgemein eine Messung relativ zum Boden 17. Dabei ist grundsätzlich denkbar, dass die Messung relativ zu einem Bauteil erfolgt, dessen Höhe relativ zum Boden 17 wiederum bekannt ist, vorzugsweise wird die absolute Arbeitshöhe 10 jedoch direkt relativ zum Boden 17 gemessen. Es kann sich auch um eine Arbeitstiefe handeln, wenn das Anbaugerät 3 in den Boden 17 eingreift. Grundsätzlich betrifft die Arbeitshöhe 10 ein Bauteil des landwirtschaftlichen Anbaugerätes 3, das zur Feldbearbeitung dient. Diese Feldbearbeitung kann allerdings auch eine Aussaat oder dergleichen sein. Beispielsweise betrifft die absolute Arbeitshöhe 10 also den Abstand einer Pflugschar 18 zum Boden 17, in diesem Fall dann zumeist als Arbeitstiefe, den Abstand eines Auslasses eines Kunstdüngerstreuers 8 oder Spritzgerätes zum Boden 17 oder dergleichen. Im Fokus eines besonders bevorzugten Ausführungsbeispiels stehen hier die Bodenbearbeitungsgeräte, weshalb die Arbeitshöhe 10 vorzugsweise eine Arbeitstiefe ist.

Die Übertragung der Messdaten von dem Sensor 12 an die Steueranordnung 14 kann grundsätzlich auf beliebige Art und Weise stattfinden. Insbesondere muss der Sensor 12 die Daten nicht aktiv senden, sie können auch ausgelesen werden. Vorzugsweise findet die Übertragung regelmäßig und/oder kontinuierlich statt.

Die Montage des Sensors 12 mittels der Sensorhalterung 13 an der Montageposition 15 erfolgt derart, dass die Montage zerstörungsfrei reversibel ist. Insbesondere erfolgt sie auch nicht im Rahmen der Herstellung des Anbaugerätes 3, sondern ist vorzugsweise vor Ort auf dem Feld mit einfachen Hilfsmitteln oder ganz ohne Hilfsmittel möglich. Es kann vorgesehen sein, dass mindestens eine Sensorhalterung 13 dauerhaft an einem Anbaugerät 3 verbleibt, vorzugsweise, dass viele, beispielsweise mindestens fünf, Sensorhalterungen 13 dauerhaft an Anbaugeräten 3 verbleiben.

Der Kalibrationsdatensatz kann, wie noch erläutert wird, grundsätzlich in einem beliebigen Speicher 19 hinterlegt sein, neu erstellt werden oder der Steueranordnung 14 anderweitig zur Verfügung stehen.

Eine vorteilhafte Anwendung des vorschlagsgemäßen Verfahrens betrifft auch die Messung der Arbeitshöhe 10 bei einem Anbaugerät 3, das keine eigene Elektronik aufweist. Wie sich im Folgenden noch ergibt, kann die Sensoranordnung 11 insofern autark von dem Anbaugerät 3 sein. Alternativ kann vorgesehen sein, dass der Sensor 12 nicht mit dem Anbaugerät 3 kommuniziert. Genauso kann jedoch vorgesehen sein, dass der Sensor 12 in eine Elektronik des Anbaugerätes 3 integriert wird oder mit dieser kommuniziert. Auch bei Anbaugeräten 3 mit Elektronik kann jedoch vorgesehen sein, dass der Sensor 12 nicht direkt mit dem Anbaugerät 3 kommuniziert. Bevorzugt ist, dass die Sensoranordnung 11 mit Anbaugeräten 3 mit und ohne Elektronik verwendbar ist. Insgesamt kann sogar vorgesehen sein, dass die Ermittlung der Arbeitshöhe 10, abgesehen von der Kalibration selbst, vollständig unabhängig von dem landwirtschaftlichen Anbaugerät 3 ist.

Weiter ist hier und vorzugsweise vorgesehen, dass die montagepositionsspezifischen Kalibrationsdatensätze eine Referenzhöhe 20 und/oder eine Ausrichtung des Sensors 12 im montierten Zustand an der jeweiligen Montageposition 15 und/oder eine Lokalisierung der Montageposition 15 relativ zum Anbaugerät 3 umfassen.

Die Referenzhöhe 20 kann aus einer noch zu erläuternden Kalibrationsroutine stammen und betrifft eine Höhe der Montageposition 15 des Sensors 12 in einem Referenzzustand, vorzugsweise bei einer bekannten Arbeitshöhe 10. Die Ausrichtung des Sensors 12 kann beispielsweise eine Verkippung des Sensors 12 sein. Damit kann berücksichtigt sein, dass der Sensor 12 gegebenenfalls nicht den kürzesten Abstand zum Boden 17 misst. Die Lokalisierung der Montageposition 15 relativ zum Anbaugerät 3 kann aus einer Gruppe von vorgegebenen Montagepositionen 15 gewählt sein oder anderweitig bestimmt werden. Fig. 1 beispielsweise stellt zwei Montagepositionen 15 an einem Pflug 9 dar. Auch Fig. 2 zeigt mehrere mögliche Montagepositionen 15 an unterschiedlichen Anbaugeräten 3. Wie noch erläutert wird, ergibt sich auch die Möglichkeit, pro Anbaugerät 3 mehrere Arbeitshöhen 10 zu messen und so beispielsweise eine Neigung des Anbaugerätes 3 zu erfassen. Dafür kann die Lokalisierung der Montageposition 15 eines oder mehrerer Sensoren 12 notwendig sein.

Es kann vorgesehen sein, dass die montagepositionsspezifischen Kalibrationsdatensätze in einem Speicher 19 der Steueranordnung 14 hinterlegt sind. Dieser Speicher 19 ist hier und vorzugsweise ein lokaler Speicher 19 der landwirtschaftlichen Arbeitsmaschine 1. Grundsätzlich kommt jedoch auch ein Cloud-Speicher 19 oder dergleichen in Betracht. In dem Speicher 19 können Kalibrationsdatensätze betreffend Montagepositionen 15 an mindestens zwei, vorzugsweise mindestens drei, unterschiedlichen Typen von Anbaugeräten 3 hinterlegt sein. Die unterschiedlichen Typen von Anbaugeräten 3 umfassen vorzugsweise mindestens einen Typ Bodenbearbeitungsgerät oder weiter vorzugsweise mindestens zwei Typen Bodenbearbeitungsgeräte. Die Typen Bodenbearbeitungsgeräte können einen Pflug 9 und/oder einen Grubber und/oder eine Egge umfassen. Weiterhin können die unterschiedlichen Typen von Anbaugeräten 3 eine Sämaschine und/oder einen Kunstdüngerstreuer 8, insbesondere eine Säschar, und/oder ein Mähwerk 16 und/oder eine Pick-Up 21 und/oder ein Anbaugerät 3 mit einer Pick-Up 21, insbesondere eine Ballenpresse 7 oder einen Ladewagen, umfassen.

Vorzugsweise sind zumindest einige der Anbaugeräte 3 eigene Fahrzeuge mit mindestens einer eigenen Achse und eigenen Rädern. Zusätzlich oder alternativ kann das Anbaugerät 3 ohne Achse oder Räder ausgestaltet sein und vom Traktor oder einem anderen Anbaugerät 3 getragen werden. Diesbezüglich wird auf die bereits erwähnten Geräteschnittstellen 2 verwiesen.

Wie im unteren Bereich von Fig. 1 gezeigt, ist hier und vorzugsweise vorgesehen, dass die Sensorhalterung 13 vom Sensor 12 getrennt an den unterschiedlichen Anbaugeräten 3 montierbar ist. Der Sensor 12 ist dann reversibel an der Sensorhalterung 13 montierbar. Es kann grundsätzlich vorgesehen sein, dass die Sensorhalterung 13 ein relativ günstiges Massenbauteil ist, während der Sensor 12 selbst relativ teuer ist. Das vorschlagsgemäße Verfahren ermöglicht die Wiederverwendung des teuren Sensors 12.

Aus Komfortgründen kann jedoch vorgesehen sein, dass die Sensorhalterung 13 an dem Anbaugerät 3 verbleibt. Dies hat zum einen im Rahmen der noch zu erläuternden Kalibrationsroutine deutliche Vorteile, ermöglicht jedoch zum anderen auch, die Sensorhalterung 13 stabil und aufwändiger zu montieren, während die Montage des Sensors 12 an der Sensorhalterung 13 selbst vorzugsweise relativ einfach ist. Dies ermöglicht auch die Wiederverwendung derselben Montageposition 15 bei erneutem Anbringen des Sensors 12. Entsprechend kann der montagepositionsspezifische Kalibrationsdatensatz auch der Sensorhalterung 13 an der entsprechenden Montageposition 15 zugeordnet sein. Um diese Zuordnung nun abzubilden, kann vorgesehen sein, dass die Sensorhalterung 13 ein Identifikationsmerkmal 22 aufweist.

Das Identifikationsmerkmal 22 kann von der Sensorhalterung 13 an die Steueranordnung 14 übertragen werden. In manchen Ausführungsbeispielen weist diese Sensorhalterung 13 jedoch keine eigene Elektronik auf. Insbesondere deshalb kann auch vorgesehen sein, dass der Sensor 12, insbesondere im montierten Zustand, das Identifikationsmerkmal 22 ausliest und an die Steueranordnung 14 überträgt. Vorzugsweise weist die Sensorhalterung 13 einen NFC-Tag auf. Der Sensor 12 kann dann einen NFC-Leser aufweisen, mittels dessen der Sensor 12 das Identifikationsmerkmal 22 der Sensorhalterung 13 ausliest und an die Steueranordnung 14 überträgt. Alternativ kann auch vorgesehen sein, dass der Benutzer 23 das Identifikationsmerkmal 22 über ein Eingabegerät, insbesondere ein Smartphone, eingeben oder mit dem Smartphone auslesen kann. Das Eingabegerät kommuniziert dann mit der Steueranordnung 14 oder ist Teil der Steueranordnung 14. Das Identifikationsmerkmal 22 kann somit insbesondere auch ein QR-Code sein, den der Benutzer 23 beispielsweise in einer dedizierten App ausliest. All diese Möglichkeiten erlauben eine schnelle Montage des Sensors 12, die direkt zur Nutzbarkeit des Sensors 12 zur Ermittlung der Arbeitshöhe 10 führt. Statt eines Smartphones kann auch ein Tablet, ein Laptop, eine Smartwatch oder dergleichen verwendet werden

Zusätzlich oder alternativ kann vorgesehen sein, dass ein Benutzer 23 den montagepositionsspezifischen Kalibrationsdatensatz an einer Eingabeeinheit, vorzugsweise einer Eingabeeinheit einer landwirtschaftlichen Arbeitsmaschine 1, die mit der Steueranordnung 14 kommuniziert, auswählt, oder, dass die Steueranordnung 14 den montagepositionsspezifischen Kalibrationsdatensatz auf Basis des Identifikationsmerkmal 22 automatisch auswählt.

Wie bereits angedeutet, weisen diverse landwirtschaftliche Anbaugeräte 3 unterschiedliche relevante Arbeitshöhen 10 auf. Beispielhaft ist in Fig. 2a) ein Pflug 9 mit mehreren Pflugscharen 18 dargestellt. Jede dieser Pflugscharen 18 weist eine eigene Arbeitshöhe 10 auf. Wenn der Pflug 9 beispielsweise entlang seiner Längsachse stark geneigt ist, würde das Optimieren nur einer Arbeitshöhe 10 nicht zu optimalen Ergebnissen führen. Eine Lösung dafür ist, wie in Fig. 2 dargestellt, mehrere Sensoren 12 zu verwenden. Dies geht jedoch wiederum mit Kosten für jeden der Sensoren 12 einher.

Daher kann vorgesehen sein, dass die Steueranordnung 14 die Arbeitshöhe 10 zusätzlich aus einem anbaugerätespezifischen Kalibrationsdatensatz ermittelt und der anbaugerätespezifische Kalibrationsdatensatz eine Kinematik des jeweiligen Anbaugerätes 3 umfasst, und/oder, dass die Steueranordnung 14 die Arbeitshöhe 10 zusätzlich aus einem Kopplungsdatensatz ermittelt und der Kopplungsdatensatz Maschinenparameter einer Geräteschnittstelle 2 zwischen der landwirtschaftlichen Arbeitsmaschine 1 und dem jeweiligen Anbaugerät 3 umfasst, vorzugsweise, dass der Kopplungsdatensatz Maschinenparameter eines Dreipunkt-Krafthebers 4 umfasst.

Mittels des anbaugerätespezifischen Kalibrationsdatensatzes und Kopplungsdatensatzes kann beispielsweise über eine Achstransformation mit Hilfe der Kinematik des Anbaugerätes 3 oder über bekannte Maschinenparameter der Geräteschnittstelle 2 die Anzahl an notwendigen Sensoren 12 zur Ermittlung mehrerer Arbeitshöhen reduziert werden. Auch die Ermittlung einer einzelnen Arbeitshöhe kann so gegebenenfalls verifiziert oder genauer vorgenommen werden. In einem bevorzugten Ausführungsbeispiel kann allerdings mindestens eine Arbeitshöhe 10 ohne Berücksichtigung der Maschinenparameter der Geräteschnittstelle 2 ermittelt werden.

Grundsätzlich kann der anbaugerätespezifische Kalibrationsdatensatz in dem montagepositionsspezifischen Kalibrationsdatensatz enthalten sein oder andersrum. Der Kopplungsdatensatz kann anbaugerätespezifisch sein, muss dies jedoch nicht. Beispielsweise kann dieser Längen von Hydraulikzylindern der Geräteschnittstelle 2 umfassen. Allgemein sind unter Maschinenparametern sämtliche Einstellungen, zugehörige Sensormesswerte und dergleichen zu verstehen. Hier und vorzugsweise betreffen die Maschinenparameter zumindest teilweise Maschinenparameter, die einen direkten Einfluss auf die Arbeitshöhe 10, die ermittelt werden soll, haben.

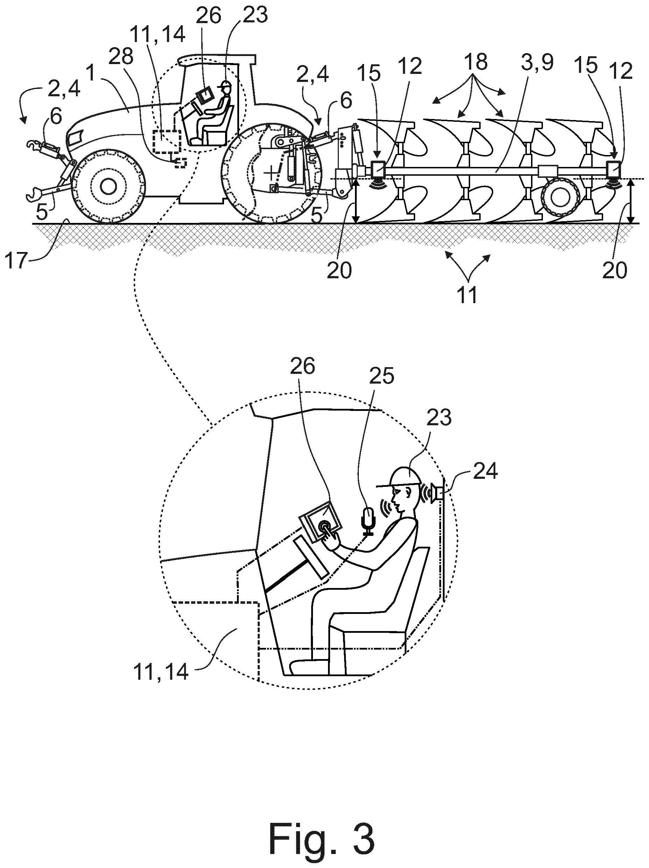

Weiter ist hier und vorzugsweise vorgesehen, dass die Steueranordnung 14 eine Kalibrationsroutine durchführt, in der die Steueranordnung 14 einen montagepositionsspezifischen Kalibrationsdatensatz erzeugt und vorzugsweise in dem Speicher 19 abspeichert. Diese Kalibrationsroutine wird im Folgenden näher erläutert. Dabei sei insbesondere auf Fig. 3 verwiesen. Vorzugsweise ist vorgesehen, dass in der Kalibrationsroutine die Steueranordnung 14 eine Referenzhöhe 20 und/oder eine Ausrichtung des Sensors 12 im montierten Zustand an der jeweiligen Montageposition 15 und/oder eine Lokalisierung der Montageposition 15 relativ zum Anbaugerät 3 in dem montagepositionsspezifischen Kalibrationsdatensatz abspeichert. Auch eine maximale und/oder minimale Arbeitshöhe 10 kann in dem Kalibrationsdatensatz abgespeichert werden.

Die Kalibrationsroutine wird hier und vorzugsweise auf ebenem Grund durchgeführt. Dabei kann die Steueranordnung 14 dem Benutzer 23 mitteilen, dass er die landwirtschaftliche Arbeitsmaschine 1 und/oder das Anbaugerät 3 auf ebenem Grund abstellen soll und/oder annehmen, dass dies geschehen ist. Weiter ist vorzugsweise vorgesehen, dass das Anbaugerät 3 eine Referenzhöhe 20 einnimmt. Beim Pflug 9 kann die Referenzhöhe 20 beispielsweise bei einer Arbeitshöhe 10 von null festgelegt werden, wenn die Pflugscharen 18 auf dem Boden 17 abgestellt sind. Bei einer Säeinrichtung beispielsweise kann es jedoch auch vorkommen, dass die niedrigste, einstellbare Höhe und eine übliche Arbeitshöhe 10 zu weit auseinander liegen, um den Sensor 12 so zu kalibrieren und während der Nutzung dennoch innerhalb der Spezifikation des Sensors 12 zu bleiben. Daher kann genauso vorgesehen sein, dass der Benutzer 23 die Referenzhöhe 20 eingeben oder anderweitig bestimmen muss.

Vorzugsweise misst die Steueranordnung 14 mittels des Sensors 12 in der Kalibrationsroutine einen Abstand des Sensors 12 zum Boden 17 und speichert diesen als Referenzhöhe 20 ab. Besonders interessant daran ist, dass die Montageposition 15, die von der Steueranordnung 14 vorgegeben werden kann, vom Benutzer 23, insbesondere in Höhenrichtung, nicht genau eingehalten werden muss, da sie sich bei der Ermittlung der Arbeitshöhe 10 aus der Referenzhöhe 20 herauskürzt. Auch in andere Richtungen kommt es aufgrund der in der Landwirtschaft vorherrschenden Toleranzen zumeist nicht auf eine hohe Präzision an.

Sofern das Anbaugerät 3 eigene Einstellmöglichkeiten der Arbeitshöhe 10 aufweist, kann vorgesehen sein, dass die während der Kalibrationsroutine vorliegenden Einstellungen ebenfalls in dem montagepositionsspezifischen Kalibrationsdatensatz abgespeichert werden und Änderungen dieser Einstellungen können zu einer Warnung an den Benutzer 23 führen oder gegebenenfalls mittels eines Modells des Anbaugerätes 3 bei der Ermittlung der Arbeitshöhe 10 berücksichtigt werden.

Weiter ist hier und vorzugsweise vorgesehen, dass die Steueranordnung 14 einen Benutzer 23 mittels einer Ausgabeeinheit in einem natürlichsprachigen Dialog durch die Kalibrationsroutine leitet, vorzugsweise, dass die Steueranordnung 14 dem Benutzer 23 eine Montageposition 15 vorgibt oder der Benutzer 23 die Montageposition 15, vorzugsweise per Spracheingabe, an die Steueranordnung 14 übermittelt, und/oder, dass die Steueranordnung 14 dem Benutzer 23 eine Einstellung einer Arbeitshöhe 10 des Anbaugerätes 3 vorgibt oder der Benutzer 23 die Einstellung einer Arbeitshöhe 10, vorzugsweise per Spracheingabe, an die Steueranordnung 14 übermittelt, und/oder, dass die Steueranordnung 14 dem Benutzer 23 vorgibt, die landwirtschaftliche Arbeitsmaschine 1 und/oder das Anbaugerät 3 auf ebenem Grund abzustellen.

Zusätzlich oder alternativ kann ein natürlichsprachiger Dialog vorgesehen sein, um den Benutzer 23 durch eine Montage der Sensorhalterung 13 und/oder eine Wahl der Montageposition 15 zu leiten.

Der Dialog kann mittels eines Sprachausgabegerätes 24 und/oder Spracheingabegerätes 25 der landwirtschaftlichen Arbeitsmaschine 1 und/oder eines Smartphones durchgeführt werden. Genauso kann jedoch auch ein Terminal 26 der landwirtschaftlichen Arbeitsmaschine 1 und/oder das Smartphone ohne Spracheingabe und/oder -ausgabe verwendet werden.

Hier und vorzugsweise ist vorgesehen, dass die landwirtschaftliche Arbeitsmaschine 1 und/oder das Anbaugerät 3 während der Kalibrationsroutine auf ebenem Untergrund steht, dass der Benutzer 23 die Sensorhalterung 13 an einer Montageposition 15 an einem landwirtschaftlichen Anbaugerät 3 montiert und den Sensor 12 mit der Sensorhalterung 13 verbindet und dass die Steueranordnung 14 eine Kalibrationsroutine durchführt, in der die Steueranordnung 14 eine Referenzhöhe 20 ermittelt und einen montagepositionsspezifischen Kalibrationsdatensatz erzeugt und vorzugsweise in dem Speicher 19 hinterlegt. In Fig. 3 ist dieser Vorgang dargestellt, wobei der Sensor 12 bereits in der Sensorhalterung 13 montiert wurde.

Wie oben bereits erläutert, kann vorgesehen sein, dass die Steueranordnung 14 die Arbeitshöhe 10 als Differenz eines gemessenen Abstands des Sensors 12 zum Boden 17 und der Referenzhöhe 20 ermittelt, und/oder, dass die Steueranordnung 14 die Arbeitshöhe 10 kontinuierlich ermittelt, und/oder, dass die Steueranordnung 14 die Arbeitshöhe 10 an eine Ausgabeeinheit zur Ausgabe an den Benutzer 23 ausgibt, und/oder, dass die Steueranordnung 14 basierend auf der Arbeitshöhe 10 einen Maschinenparameter der landwirtschaftlichen Arbeitsmaschine 1 und/oder des Anbaugerätes 3 einstellt, vorzugsweise, dass die Steueranordnung 14 die Arbeitshöhe 10 regelt.

Die Ausgabeeinheit kann das Terminal 26 oder das Smartphone sein und/oder das Sprachausgabegerät 24 aufweisen.

Die Möglichkeit, mittels der ermittelten Arbeitshöhe 10 diese Arbeitshöhe 10 zu Steuern oder zu Regeln ist besonders interessant. Bisher waren derartige Regelungen sehr kompliziert, da sie üblicherweise eine Vielzahl an Maschinenparametern der Geräteschnittstelle 2, des Anbaugerätes 3 und der landwirtschaftlichen Arbeitsmaschine 1 berücksichtigen mussten. Durch die Möglichkeit, die Arbeitshöhe 10 nun direkt als Feedback in einer Regelung einzubauen, kann diese mittels weniger Stellgrößen, insbesondere der Geräteschnittstelle 2, gezielt beeinflusst werden. Ein erwarteter Einfluss von Maschinenparametern der Geräteschnittstelle 2 kann beispielsweise in einem Kennfeldmodell hinterlegt sein.

Weiter ist hier und vorzugsweise vorgesehen, dass der Sensor 12 in der Kalibrationsroutine und/oder im Betrieb während der Erfassung der Arbeitshöhe 10 einen Abstand zum Boden 17 von mindestens 10 cm, vorzugsweise mindestens 20 cm, und/oder höchstens 1,5 m, vorzugsweise höchstens 1,2 m, aufweist, vorzugsweise, dass die Referenzhöhe 20 mindestens 10 cm, vorzugsweise mindestens 20 cm, und/oder höchstens 1,5 m, vorzugsweise höchstens 1,2 m, beträgt.

Vorgeschlagen wird außerdem gemäß einer weiteren Lehre, der eigenständige Bedeutung zukommt, eine Sensoranordnung 11 zur Messung einer absoluten Arbeitshöhe 10 mehrerer landwirtschaftlicher Anbaugeräte 3, insbesondere eingerichtet zur Verwendung in dem vorschlagsgemäßen Verfahren mit einem Sensor 12, mit mindestens einer Sensorhalterung 13 und mit einer Steueranordnung 14, wobei der Sensor 12 mittels der mindestens einen Sensorhalterung 13 jeweils an einer Montageposition 15 an unterschiedlichen Anbaugeräten 3 reversibel montierbar ist, wobei der Sensor 12 eingerichtet ist, im montierten Zustand eine Arbeitshöhe 10 des Anbaugerätes 3 betreffende Messdaten aufzunehmen und an die Steueranordnung 14 zu übertragen, wobei die Steueranordnung 14 eingerichtet ist, aus einem montagepositionsspezifischen Kalibrationsdatensatz die Arbeitshöhe 10 des jeweiligen Anbaugerätes 3 zu ermitteln.

Auf alle Ausführungen zu dem vorschlagsgemäßen Verfahren darf verwiesen werden. Die folgenden Ausführungen können auch das vorschlagsgemäße Verfahren betreffen.

Es kann vorgesehen sein, dass der Sensor 12 form- und/oder kraftschlüssig an der Sensorhalterung 13 montierbar ist, vorzugsweise, dass der Sensor 12 mittels einer Schnellspanneinrichtung und/oder mittels einer oder mehrerer Schrauben und/oder magnetisch an der Sensorhalterung 13 montierbar ist und/oder in die Sensorhalterung 13 einclipsbar ist. Bevorzugt ist der Sensor 12 mit handelsüblichem Werkzeug oder ganz ohne Werkzeug an der Sensorhalterung 13 montierbar.

Weiter ist hier und vorzugsweise vorgesehen, dass die Sensorhalterung 13 eine Batterie und/oder eine elektrische Verbindungseinheit 27, insbesondere ein Kabel oder eine Antenne, zur Verbindung mit der Steueranordnung 14 und/oder zur Energieübertragung von einer landwirtschaftlichen Arbeitsmaschine 1 an den Sensor 12, aufweist, vorzugsweise, dass die elektrische Verbindungseinheit 27 eine Busanbindung, insbesondere eine ISOBUS- oder CAN Busanbindung, aufweist.

Mittels einer derart ausgestalteten Sensorhalterung 13 kann insbesondere der Sensor 12 mit Energie versorgt werden. Gleichzeitig oder alternativ kann die Sensorhalterung 13 so genutzt werden, um die Daten von dem Sensor 12 an die Steueranordnung 14 zu übertragen. Besonders interessant ist das, wenn die Steueranordnung 14 Teil der landwirtschaftlichen Arbeitsmaschine 1 ist oder die Verbindung zur Steueranordnung 14 über die landwirtschaftliche Arbeitsmaschine 1 läuft. Weist die Sensorhalterung 13 ein Kabel auf, das gegebenenfalls mit einem Bus der landwirtschaftlichen Arbeitsmaschine 1 verbindbar ist, und verbleibt die Sensorhalterung 13 an dem landwirtschaftlichen Anbaugerät 3, muss die Verkabelung nur einmal vorgenommen werden. Damit wird das "plug and play"-Konzept der Sensoranordnung 11 konsequent weitergedacht. Die Batterie kann selbstverständlich alternativ ein Akku sein. Genauso kann der Sensor 12 auch eine eigene Batterie oder einen eigenen Akku aufweisen. Insbesondere ist auch denkbar, dass die Sensorhalterung 13 keinerlei Elektronik aufweist, wobei der NFC-Tag nicht als Elektronik zählt. Sofern das Anbaugerät 3 über eine eigene Energieversorgung verfügt, die gegebenenfalls von der landwirtschaftlichen Arbeitsmaschine 1 gespeist wird, kann der Sensor 12, insbesondere über die Sensorhalterung 13, auch mit dieser verbunden werden.

Es ist hier und vorzugsweise so, dass der Sensor 12 ein, insbesondere kontaktloser, Abstandssensor ist, vorzugsweise, dass der Abstandssensor auf Basis elektromagnetischer Wellen oder akustischer Wellen oder mechanischer Abtastung funktioniert.

Der Abstandssensor kann ein Radar-Sensor oder ein Lidar-Sensor oder ein optischer Sensor oder ein Ultraschall-Sensor sein. Alternativ kann der Sensor 12 ein Sensor 12, insbesondere Kraftsensor oder Wegsensor, an einem den Boden 17 berührenden Bauteil, insbesondere einem Tastbügel, einer Schleifkufe oder einer Stützrolle, sein.

Es kann auch vorgesehen sein, dass die Sensoranordnung 11 mindestens zwei Sensoren 12 mit unterschiedlichen Funktionsprinzipien aufweist, die jeweils reversibel an der Sensorhalterung 13 montierbar sind. Dadurch, dass die Sensoren 12 modular nutzbar sind, können auch mehrere unterschiedliche Sensoren 12 vorhanden sein, die entsprechend abhängig vom Anbaugerät 3 und/oder der landwirtschaftlichen Tätigkeit, die durchgeführt werden soll, ausgewählt werden. Diese sind dann vorzugsweise jeweils mit derselben Sensorhalterung 13 kompatibel.

Weiter ist hier und vorzugsweise vorgesehen, dass die Sensoranordnung 11 mehrere Sensorhalterungen 13 und zugeordnete Sensoren 12 umfasst, die an mehreren Montagepositionen 15 an einem gemeinsamen Anbaugerät 3 reversibel montierbar sind und die Steueranordnung 14 eingerichtet ist, aus einem gemeinsamen Kalibrationsdatensatz für die mehreren Montagepositionen 15 und/oder aus einzelnen Kalibrationsdatensätzen für die mehreren Montagepositionen 15 mehrere Arbeitshöhen 10 und/oder eine Längs- und/oder eine Querneigung des Anbaugerätes 3 zu ermitteln.

So wird es ermöglicht, unterschiedliche Arbeitshöhen 10 des Anbaugerätes 3 gemeinsam zu steuern oder zu regeln. Die Arbeitshöhen 10 können dabei mit üblichen mathematischen Verfahren berechnet werden. Eine Achstransformation über die Kinematik des Anbaugerätes 3 wie aus der Robotik bekannt, kann zum Einsatz kommen.

Weiter ist hier und vorzugsweise vorgesehen, dass die Sensoranordnung 11 ein Antennenmodul 28 aufweist, dass das Antennenmodul 28 eine Busanbindung, insbesondere eine ISOBUS- oder CAN Busanbindung, zur Verbindung mit der Steueranordnung 14 aufweist und eine Antenne zur kabellosen Verbindung mit dem mindestens einen Sensor 12, vorzugsweise, dass das Antennenmodul 28 an der landwirtschaftliche Arbeitsmaschine 1 reversibel montierbar und über die Busanbindung mit einem Bus der landwirtschaftlichen Arbeitsmaschine 1 verbindbar ist.

Die Möglichkeit eines derartigen Antennenmoduls 28, das insbesondere über eine Busanbindung verfügt, ist interessant, da dieses ebenfalls modular mit mehreren landwirtschaftlichen Arbeitsmaschinen 1 verwendet werden kann und eine Verkabelung des Anbaugerätes 3 so entfallen kann. Das Antennenmodul 28 kann dabei drahtlos direkt mit dem Sensor 12 oder mit den Sensorhalterungen 13 kommunizieren. Es ist also beispielsweise denkbar, dass ein Benutzer 23 nur das Antennenmodul 28 und einen oder mehrere Sensoren 12 an entsprechende Steckplätze stecken muss und so sofort eine Arbeitshöhensensorik 10 zur Verfügung hat. Die Steckplätze der Sensoren 12 sind dabei die Sensorhalterungen 13, für das Antennenmodul 28 kann eine Antennenmodulhalterung vorgesehen sein.

Vorgeschlagen wird außerdem gemäß einer weiteren Lehre, der eigenständige Bedeutung zukommt, ein landwirtschaftliches Gespann mit einer landwirtschaftlichen Arbeitsmaschine 1 und einem landwirtschaftlichen Anbaugerät 3 mit einer vorschlagsgemäßen Sensoranordnung 11. Auf alle Ausführungen zu dem vorschlagsgemäßen Verfahren und der vorschlagsgemäßen Sensoranordnung 11 darf verwiesen werden.

Wesentlich ist nun, dass der Sensor 12 mit der Sensorhalterung 13 an dem Anbaugerät 3 montiert ist.

Weiter ist hier und vorzugsweise vorgesehen, dass die Steueranordnung 14, insbesondere vollständig, in der landwirtschaftlichen Arbeitsmaschine 1 verbaut ist.

Vorgeschlagen wird außerdem gemäß einer weiteren Lehre, der eigenständige Bedeutung zukommt, eine landwirtschaftliche Flotte 29 mit mindestens einer landwirtschaftlichen Arbeitsmaschine 1 und mindestens zwei landwirtschaftlichen Anbaugeräten 3 und einer vorschlagsgemäßen Sensoranordnung 11. Auf alle Ausführungen zu dem vorschlagsgemäßen Verfahren, der vorschlagsgemäßen Sensoranordnung 11 und dem vorschlagsgemäßen landwirtschaftlichen Gespann darf verwiesen werden.

Wesentlich ist nun, dass die Sensoranordnung 11 mindestens zwei Sensorhalterungen 13 aufweist, von denen je eine an einem der Anbaugeräte 3 oder beide an mehreren Anbaugeräten 3 montierbar sind, dass an beiden Anbaugeräten 3 je mindestens eine Sensorhalterung 13 montiert ist. Wie bereits erläutert, verbleibt diese Sensorhalterung 13 vorzugsweise zumindest zeitweise, insbesondere über Monate oder Jahre, an dem Anbaugerät 3.

Vorgeschlagen wird außerdem gemäß einer weiteren Lehre, der eigenständige Bedeutung zukommt, eine Sensorhalterung 13 vorzugsweise zur Verwendung als Teil einer vorschlagsgemäßen Sensoranordnung 11. Auf alle Ausführungen zu dem vorschlagsgemäßen Verfahren, der vorschlagsgemäßen Sensoranordnung 11, dem vorschlagsgemäßen landwirtschaftlichen Gespann und der vorschlagsgemäßen landwirtschaftlichen Flotte darf verwiesen werden.

Wesentlich ist nun, dass die Sensorhalterung 13 geeignet ist, einen Sensor 12 aufzunehmen und an einem landwirtschaftlichen Anbaugerät 3 befestigt zu werden, dass die Sensorhalterung 13 eine elektrische Verbindungseinheit 27, insbesondere ein Kabel oder eine Antenne, zur Verbindung mit einer Steueranordnung 14 einer landwirtschaftlichen Arbeitsmaschine 1 und/oder zur Energieübertragung von einer landwirtschaftlichen Arbeitsmaschine 1 an den Sensor 12 und ein Identifikationsmerkmal 22 aufweist, dass die Sensorhalterung 13 das Identifikationsmerkmal 22 an die Steueranordnung 14 übertragen kann und/oder das Identifikationsmerkmal 22 geeignet ist, von dem Sensor 12 ausgelesen zu werden.

Vorgeschlagen wird außerdem gemäß einer weiteren Lehre, der eigenständige Bedeutung zukommt, ein Abstandssensor zur Verwendung als Sensor 12 in einer vorschlagsgemäßen Sensoranordnung 11. Auf alle Ausführungen zu dem vorschlagsgemäßen Verfahren, der vorschlagsgemäßen Sensoranordnung 11, dem vorschlagsgemäßen landwirtschaftlichen Gespann, der vorschlagsgemäßen landwirtschaftlichen Flotte und der vorschlagsgemäßen Sensorhalterung 13 darf verwiesen werden.

Wesentlich ist nun, dass der Sensor 12 das Identifikationsmerkmal 22 der Sensorhalterung 13 auslesen und das Identifikationsmerkmal 22 sowie einen Abstand umfassende Messdaten in einem Bus-kompatiblen Format an die Steueranordnung 14 der landwirtschaftlichen Arbeitsmaschine 1 übertragen kann.

Vorgeschlagen wird außerdem gemäß einer weiteren Lehre, der eigenständige Bedeutung zukommt, ein Antennenmodul 28 zur Verwendung in einer vorschlagsgemäßen Sensoranordnung. Auf alle Ausführungen zu dem vorschlagsgemäßen Verfahren, der vorschlagsgemäßen Sensoranordnung, dem vorschlagsgemäßen landwirtschaftlichen Gespann, der vorschlagsgemäßen landwirtschaftlichen Flotte, der vorschlagsgemäßen Sensorhalterung und dem vorschlagsgemäßen Abstandssensor darf verwiesen werden.

### Bezugszeichenliste

- 1: landwirtschaftliche Arbeitsmaschine
- 2: Geräteschnittstelle
- 3: landwirtschaftliches Anbaugerät
- 4: Dreipunkt-Kraftheber
- 5: Unterlenker
- 6: Oberlenker
- 7: Ballenpresse
- 8: Kunstdüngerstreuer
- 9: Pflug
- 10: Arbeitshöhe
- 11: Sensoranordnung
- 12: Sensor
- 13: Sensorhalterung
- 14: Steueranordnung
- 15: Montageposition
- 16: Mähwerk
- 17: Boden
- 18: Pflugschar
- 19: Speicher
- 20: Referenzhöhe
- 21: Pick-Up
- 22: Identifikationsmerkmal
- 23: Benutzer
- 24: Sprachausgabegerät
- 25: Spracheingabegerät
- 26: Terminal
- 27: elektrische Verbindungseinheit
- 28: Antennenmodul
- 29: landwirtschaftliche Flotte

## Patentansprüche

1. Verfahren zur Messung einer absoluten Arbeitshöhe (10) mehrerer landwirtschaftlicher Anbaugeräte (3), mittels einer Sensoranordnung (11) mit einem Sensor (12), mit mindestens einer Sensorhalterung (13) und mit einer Steueranordnung (14),
wobei der Sensor (12) mittels der mindestens einen Sensorhalterung (13) jeweils an einer Montageposition (15) an unterschiedlichen Anbaugeräten (3) reversibel montiert wird, wobei der Sensor (12) im montierten Zustand eine Arbeitshöhe (10) des Anbaugerätes (3) betreffende Messdaten aufnimmt und an die Steueranordnung (14) überträgt und wobei die Steueranordnung (14) aus einem montagepositionsspezifischen Kalibrationsdatensatz die Arbeitshöhe (10) des jeweiligen Anbaugerätes (3) ermittelt.

2. Verfahren nach Anspruch 1, **dadurch gekennzeichnet, dass** die montagepositionsspezifischen Kalibrationsdatensätze eine Referenzhöhe (20) und/oder eine Ausrichtung des Sensors (12) im montierten Zustand an der jeweiligen Montageposition (15) und/oder eine Lokalisierung der Montageposition (15) relativ zum Anbaugerät (3) umfassen.

3. Verfahren nach Anspruch 1 oder 2, **dadurch gekennzeichnet, dass** die montagepositionsspezifischen Kalibrationsdatensätze in einem Speicher (19) der Steueranordnung (14) hinterlegt sind, vorzugsweise, dass Kalibrationsdatensätze betreffend Montagepositionen (15) an mindestens zwei, vorzugsweise mindestens drei, unterschiedlichen Typen von Anbaugeräten (3) in dem Speicher (19) hinterlegt sind, die unterschiedlichen Typen von Anbaugeräten (3) vorzugsweise umfassend mindestens einen Typ Bodenbearbeitungsgerät, weiter vorzugsweise mindestens zwei Typen Bodenbearbeitungsgeräte, die Typen Bodenbearbeitungsgeräte vorzugsweise umfassend einen Pflug (9) und/oder einen Grubber und/oder eine Egge, und/oder die unterschiedliche Typen von Anbaugeräten (3) umfassend eine Sämaschine und/oder einen Kunstdüngerstreuer (8), insbesondere eine Säschar, und/oder ein Mähwerk (16) und/oder eine Pickup und/oder ein Anbaugerät (3) mit einer Pickup, insbesondere eine Ballenpresse (7) oder einen Ladewagen.

4. Verfahren nach einem der vorhergehenden Ansprüche, **dadurch gekennzeichnet, dass** die Sensorhalterung (13) vom Sensor (12) getrennt an den unterschiedlichen Anbaugeräten (3) montierbar ist und der Sensor (12) reversibel an der Sensorhalterung (13) montierbar ist, vorzugsweise, dass die Sensorhalterung (13) ein Identifikationsmerkmal (22) aufweist, dass die Sensorhalterung (13) das Identifikationsmerkmal (22) an die Steueranordnung (14) überträgt, oder, dass der Sensor (12), insbesondere im montierten Zustand, das Identifikationsmerkmal (22) ausliest und an die Steueranordnung (14) überträgt, vorzugsweise, dass die Sensorhalterung (13) einen NFC Tag mit dem Identifikationsmerkmal (22) aufweist, dass der Sensor (12) einen NFC Leser aufweist und dass der Sensor (12) das Identifikationsmerkmal (22) der Sensorhalterung (13) mittels des NFC Lesers ausliest und an die Steueranordnung (14) überträgt.

5. Verfahren nach einem der vorhergehenden Ansprüche, **dadurch gekennzeichnet, dass** ein Benutzer (23) den montagepositionsspezifischen Kalibrationsdatensatz an einer Eingabeeinheit, vorzugsweise einer Eingabeeinheit einer landwirtschaftlichen Arbeitsmaschine (1), die mit der Steueranordnung (14) kommuniziert, auswählt, oder, dass die Steueranordnung (14) den montagepositionsspezifischen Kalibrationsdatensatz auf Basis des Identifikationsmerkmals (22) automatisch auswählt.

6. Verfahren nach einem der vorhergehenden Ansprüche, **dadurch gekennzeichnet, dass** die Steueranordnung (14) die Arbeitshöhe (10) zusätzlich aus einem anbaugerätespezifischen Kalibrationsdatensatz ermittelt und der anbaugerätespezifische Kalibrationsdatensatz eine Kinematik des jeweiligen Anbaugerätes (3) umfasst, und/oder, dass die Steueranordnung (14) die Arbeitshöhe (10) zusätzlich aus einem Kopplungsdatensatz ermittelt und der Kopplungsdatensatz Maschinenparameter einer Geräteschnittstelle (2) zwischen der landwirtschaftlichen Arbeitsmaschine (1) und dem jeweiligen Anbaugerät (3) umfasst, vorzugsweise, dass der Kopplungsdatensatz Maschinenparameter eines Dreipunkt-Krafthebers (4) umfasst.

7. Verfahren nach einem der vorhergehenden Ansprüche, **dadurch gekennzeichnet, dass** die Steueranordnung (14) eine Kalibrationsroutine durchführt, in der die Steueranordnung (14) einen montagepositionsspezifischen Kalibrationsdatensatz erzeugt und vorzugsweise in dem Speicher (19) abspeichert, vorzugsweise, dass in der Kalibrationsroutine die Steueranordnung (14) eine Referenzhöhe (20) und/oder eine Ausrichtung des Sensors (12) im montierten Zustand an der jeweiligen Montageposition (15) und/oder eine Lokalisierung der Montageposition (15) relativ zum Anbaugerät (3) in dem montagepositionsspezifischen Kalibrationsdatensatz abspeichert, weiter vorzugsweise, dass in der Kalibrationsroutine die Steueranordnung (14) mittels des Sensors (12) einen Abstand des Sensors (12) zum Boden (17) misst und als Referenzhöhe (20) abspeichert.

8. Verfahren nach Anspruch 7, **dadurch gekennzeichnet, dass** die Steueranordnung (14) einen Benutzer (23) mittels einer Ausgabeeinheit in einem natürlichsprachigen Dialog durch die Kalibrationsroutine leitet, vorzugsweise, dass die Steueranordnung (14) dem Benutzer (23) eine Montageposition (15) vorgibt oder der Benutzer (23) die Montageposition (15), vorzugsweise per Spracheingabe, an die Steueranordnung (14) übermittelt, und/oder, dass die Steueranordnung (14) dem Benutzer (23) eine Einstellung einer Arbeitshöhe (10) des Anbaugerätes (3) vorgibt oder der Benutzer (23) die Einstellung einer Arbeitshöhe (10), vorzugsweise per Spracheingabe, an die Steueranordnung (14) übermittelt, und/oder, dass die Steueranordnung (14) dem Benutzer (23) vorgibt, die landwirtschaftliche Arbeitsmaschine (1) und/oder das Anbaugerät (3) auf ebenem Grund abzustellen.

9. Verfahren nach Anspruch 7 oder 8, **dadurch gekennzeichnet, dass** die landwirtschaftliche Arbeitsmaschine (1) und/oder das Anbaugerät (3) während der Kalibrationsroutine auf ebenem Untergrund steht, dass der Benutzer (23) die Sensorhalterung (13) an einer Montageposition (15) an einem landwirtschaftlichen Anbaugerät (3) montiert und den Sensor (12) mit der Sensorhalterung (13) verbindet und dass die Steueranordnung (14) eine Kalibrationsroutine durchführt, in der die Steueranordnung (14) eine Referenzhöhe (20) ermittelt und einen montagepositionsspezifischen Kalibrationsdatensatz erzeugt und vorzugsweise in dem Speicher (19) hinterlegt.

10. Verfahren nach einem der vorhergehenden Ansprüche, **dadurch gekennzeichnet, dass** die Steueranordnung (14) die Arbeitshöhe (10) als Differenz eines gemessenen Abstands des Sensors (12) zum Boden (17) und der Referenzhöhe (20) ermittelt, und/oder, dass die Steueranordnung (14) die Arbeitshöhe (10) kontinuierlich ermittelt, und/oder, dass die Steueranordnung (14) die Arbeitshöhe (10) an eine Ausgabeeinheit zur Ausgabe an den Benutzer (23) ausgibt, und/oder, dass die Steueranordnung (14) basierend auf der Arbeitshöhe (10) einen Maschinenparameter der landwirtschaftlichen Arbeitsmaschine (1) und/oder des Anbaugerätes (3) einstellt, vorzugsweise, dass die Steueranordnung (14) die Arbeitshöhe (10) regelt.

11. Verfahren nach einem der vorhergehenden Ansprüche, **dadurch gekennzeichnet, dass** der Sensor (12) in der Kalibrationsroutine und/oder im Betrieb während der Erfassung der Arbeitshöhe (10) einen Abstand zum Boden (17) von mindestens 10 cm, vorzugsweise mindestens 20 cm, und/oder höchstens 1,5 m, vorzugsweise höchstens 1,2 m, aufweist, vorzugsweise, dass die Referenzhöhe (20) mindestens 10 cm, vorzugsweise mindestens 20 cm, und/oder höchstens 1,5 m, vorzugsweise höchstens 1,2 m, beträgt.

12. Sensoranordnung zur Messung einer absoluten Arbeitshöhe (10) mehrerer landwirtschaftlicher Anbaugeräte (3), insbesondere eingerichtet zur Verwendung in dem Verfahren nach einem der vorhergehenden Ansprüche,
mit einem Sensor (12), mit mindestens einer Sensorhalterung (13) und mit einer Steueranordnung (14), wobei der Sensor (12) mittels der mindestens einen Sensorhalterung (13) jeweils an einer Montageposition (15) an unterschiedlichen Anbaugeräten (3) reversibel montierbar ist, wobei der Sensor (12) eingerichtet ist, im montierten Zustand eine Arbeitshöhe (10) des Anbaugerätes (3) betreffende Messdaten aufzunehmen und an die Steueranordnung (14) zu übertragen,
wobei die Steueranordnung (14) eingerichtet ist, aus einem montagepositionsspezifischen Kalibrationsdatensatz die Arbeitshöhe (10) des jeweiligen Anbaugerätes (3) zu ermitteln.

13. Sensoranordnung nach Anspruch 12, **dadurch gekennzeichnet, dass** der Sensor (12) form- und/oder kraftschlüssig an der Sensorhalterung (13) montierbar ist, vorzugsweise, dass der Sensor (12) mittels einer Schnellspanneinrichtung und/oder mittels einer oder mehrerer Schrauben und/oder magnetisch an der Sensorhalterung (13) montierbar ist und/oder in die Sensorhalterung (13) einclipsbar ist.

14. Sensoranordnung nach Anspruch 12 oder 13, **dadurch gekennzeichnet, dass** die Sensorhalterung (13) eine Batterie und/oder eine elektrische Verbindungseinheit (27), insbesondere ein Kabel oder eine Antenne, zur Verbindung mit der Steueranordnung (14) und/oder zur Energieübertragung von einer landwirtschaftlichen Arbeitsmaschine (1) an den Sensor (12), aufweist, vorzugsweise, dass die elektrische Verbindungseinheit (27) eine Busanbindung, insbesondere eine ISOBUS- oder CAN Busanbindung, aufweist.

15. Sensoranordnung nach einem der Ansprüche 12 bis 14, **dadurch gekennzeichnet, dass** der Sensor (12) ein, insbesondere kontaktloser, Abstandssensor ist, vorzugsweise, dass der Abstandssensor auf Basis elektromagnetischer Wellen oder akustischer Wellen oder mechanischer Abtastung funktioniert, weiter vorzugsweise, dass der Abstandssensor ein Radar-Sensor (12) oder ein Lidar-Sensor (12) oder ein optischer Sensor (12) oder ein Ultraschall-Sensor (12) ist, oder, dass der Sensor (12) ein Sensor (12), insbesondere Kraftsensor oder Wegsensor, an einem den Boden (17) berührenden Bauteil, insbesondere einem Tastbügel, einer Schleifkufe oder einer Stützrolle, ist.

16. Sensoranordnung nach einem der Ansprüche 12 bis 15, **dadurch gekennzeichnet, dass** die Sensoranordnung (11) mehrere Sensorhalterungen (13) und zugeordnete Sensoren (12) umfasst, die an mehreren Montagepositionen (15) an einem gemeinsamen Anbaugerät (3) reversibel montierbar sind und die Steueranordnung (14) eingerichtet ist, aus einem gemeinsamen Kalibrationsdatensatz für die mehreren Montagepositionen (15) und/oder aus einzelnen Kalibrationsdatensätzen für die mehreren Montagepositionen (15) mehrere Arbeitshöhen (10) und/oder eine Längs- und/oder eine Querneigung des Anbaugerätes (3) zu ermitteln.

17. Sensoranordnung nach einem der Ansprüche 12 bis 16, **dadurch gekennzeichnet, dass** die Sensoranordnung (11) ein Antennenmodul (28) aufweist, dass das Antennenmodul (28) eine Busanbindung, insbesondere eine ISOBUS- oder CAN Busanbindung, zur Verbindung mit der Steueranordnung (14) aufweist und eine Antenne zur kabellosen Verbindung mit dem mindestens einen Sensor (12), vorzugsweise, dass das Antennenmodul (28) an der landwirtschaftliche Arbeitsmaschine (1) reversibel montierbar und über die Busanbindung mit einem Bus der landwirtschaftlichen Arbeitsmaschine (1) verbindbar ist.

18. Landwirtschaftliches Gespann mit einer landwirtschaftlichen Arbeitsmaschine (1) und einem landwirtschaftlichen Anbaugerät (3) mit einer Sensoranordnung (11) nach einem der Ansprüche 1 bis 17, **dadurch gekennzeichnet, dass** der Sensor (12) mit der Sensorhalterung (13) an dem Anbaugerät (3) montiert ist.

19. Landwirtschaftliches Gespann nach Anspruch 18, **dadurch gekennzeichnet, dass** die Steueranordnung (14), insbesondere vollständig, in der landwirtschaftlichen Arbeitsmaschine (1) verbaut ist.

20. Landwirtschaftliche Flotte mit mindestens einer landwirtschaftlichen Arbeitsmaschine (1) und mindestens zwei landwirtschaftlichen Anbaugeräten (3) und einer Sensoranordnung (11) nach einem der Ansprüche 12 bis 17, **dadurch gekennzeichnet, dass** die Sensoranordnung (11) mindestens zwei Sensorhalterungen (13) aufweist, von denen je eine an einem der Anbaugeräte (3) oder beide an mehreren Anbaugeräten (3) montierbar sind und dass an beiden Anbaugeräten (3) je mindestens eine Sensorhalterung (13) montiert ist.

21. Sensorhalterung vorzugsweise zur Verwendung als Teil einer Sensoranordnung (11) nach einem der Ansprüche 12 bis 17,
**dadurch gekennzeichnet,**
**dass** die Sensorhalterung (13) geeignet ist, einen Sensor (12) aufzunehmen und an einem landwirtschaftlichen Anbaugerät (3) befestigt zu werden, dass die Sensorhalterung (13) eine elektrische Verbindungseinheit (27), insbesondere ein Kabel oder eine Antenne, zur Verbindung mit einer Steueranordnung (14) einer landwirtschaftlichen Arbeitsmaschine (1) und/oder zur Energieübertragung von einer landwirtschaftlichen Arbeitsmaschine (1) an den Sensor (12) und ein Identifikationsmerkmal (22) aufweist, dass die Sensorhalterung (13) das Identifikationsmerkmal (22) an die Steueranordnung (14) übertragen kann und/oder das Identifikationsmerkmal (22) geeignet ist, von dem Sensor (12) ausgelesen zu werden.

22. Abstandssensor zur Verwendung als Sensor (12) in einer Sensoranordnung (11) nach einem der Ansprüche 12 bis 17, **dadurch gekennzeichnet, dass** der Sensor (12) das Identifikationsmerkmal (22) der Sensorhalterung (13) auslesen und das Identifikationsmerkmal (22) sowie einen Abstand umfassende Messdaten in einem Bus-kompatiblen Format an die Steueranordnung (14) der landwirtschaftlichen Arbeitsmaschine (1) übertragen kann.

23. Antennenmodul zur Verwendung in einer Sensoranordnung (11) nach Anspruch 17.
